# EUROPÄISCHE PATENTSCHRIFT

(11) **EP 1 760 562 B1**
(45) Veröffentlichungstag und Bekanntmachung des Hinweises auf die Patenterteilung: **11.01.2012**
(21) Anmeldenummer: 06011344.6
(22) Anmeldetag: 01.06.2006
(51) Int. Cl.: G05B 19/416

(54) **Verfahren zur adaptiven Vorschubregelung an numerisch gesteuerten Werkzeugmaschinen**
Method for adaptive feed control on numerically controlled machine tools
Procédé destiné au contrôle adaptatif de l' avance sur des machines-outils en commande numérique

(30) Priorität: 31.08.2005 DE 102005041175
(43) Veröffentlichungstag der Anmeldung: 07.03.2007
(73) Patentinhaber: Dr. Johannes Heidenhain GmbH, 83301 Traunreut (DE)
(72) Erfinder: Fraunhofer, Hermann, 83349 Palling (DE)

(56) Entgegenhaltungen:
- WO-A1-94/14569
- US-A- 4 346 444
- US-A- 4 509 126
- US-A- 4 698 773
- US-A1- 2004 167 659

## Beschreibung

Die Erfindung betrifft ein Verfahren zur adaptiven Vorschubregelung an numerisch gesteuerten Werkzeugmaschinen. Solche Verfahren ermöglichen eine optimale Ausnutzung der Möglichkeiten einer Werkzeugmaschine im Zusammenspiel mit einer Numerischen Steuerung.

Eine numerisch gesteuerte Werkzeugmaschine (CNC) arbeitet ein NC-Programm ab, in welchem nacheinander verschiedene Bearbeitungsschritte definiert sind. Für eine Fräsmaschine werden die relativen Bewegungen zwischen einem Werkstück und einem Werkzeug festgelegt und nacheinander abgearbeitet. Der an einer rotierenden Spindel befestigte Fräser trägt dabei Material vom Werkstück ab. Neben den eigentlichen Bearbeitungsschritten sind in einem NC-Programm auch Aufgaben wie der Wechsel von einem Werkzeug zu einem anderen, das Starten und Stoppen der Drehbewegung der Werkzeugspindel oder Zustellbewegungen festgelegt, also Bewegungen des Werkzeugs ohne Eingriff in das Werkstück.

Im Zusammenhang mit numerisch gesteuerten Werkzeugmaschinen ist es z.B. aus der US 4078195 bereits bekannt, den Vorschub eines rotierenden, spanabhebenden Werkzeugs von einem während der Bearbeitung beobachteten Parameter wie z.B. der aufgenommenen Leistung einer Werkzeugspindel abhängig zu machen. Für einen konstanten Vorschub hängt die Leistung, die zum Drehen der Spindel mit der programmierten Solldrehzahl ist, von verschiedenen Parametern ab. So ist die Leistung um so höher, je härter das bearbeitete Werkstück ist, und je größer die bearbeitete Fläche des Werkstückes ist. Ein tiefer in das Werkstück eintauchendes Werkzeug erfordert eine höhere Spindelleistung, da bei konstantem Vorschub mehr Material pro Zeiteinheit entfernt werden muss. Um also eine konstant hohe Spindelleistung und damit eine schnelle Bearbeitung zu erhalten, muss der Vorschub entsprechend geregelt werden.

Aus der WO 94/14569 A1 ist ebenfalls ein Verfahren zur adaptiven Vorschubregelung an numerisch gesteuerten Werkzeugmaschinen bekannt, bei dem ein Drehmoment durch Beeinflussung eines im NC-Programm festgelegten Bahnvorschubs möglichst konstant gehalten wird. Werkzeugspezifische Parameter werden dabei in Tabellen vorgehalten.

Aus der US 4 509 126 A ist ein Verfahren zur adaptiven Vorschubregelung an numerisch gesteuerten Werkzeugmaschinen bekannt, bei dem eine von einer Spindel aufgenommene Leistung durch Beeinflussung eines im NC-Programm festgelegten Bahnvorschubs möglichst konstant gehalten wird. Die adaptive Vorschubregelung bleibt vor und nach der Berührung des Werkzeugs mit dem Werkstück deaktiviert. Das Verfahren weist eine weiche Einrück- bzw. Ausrückfunktion zu Begin bzw. am Ende der adaptiven Vorschubregelung auf, die während einer Eintrittsphase des Werkzeugs in das Werkstück bzw. während einer Austrittsphase des Werkzeugs aus dem Werkstück gelten soll.

Die im Stand der Technik bekannten adaptiven Vorschubregelungen haben allerdings den Nachteil, dass zum Einsatz der adaptiven Vorschubregelung gewisse Befehle in jedes NC-Programm aufgenommen werden müssen, um die Vorschubregelung selbst zu steuern. Dies können einfache Befehle wie das An- und Ausschalten der Vorschubregelung selbst sein, oder auch das Festlegen bestimmter Grenzwerte. Dies bedeutet, dass jedes NC-Programm, für das die adaptive Vorschubregelung zum Einsatz kommen soll, mit hohem Aufwand darauf vorbereitet werden muss. Für NC-Programme, mit denen nur kleine Stückzahlen bearbeitet werden, lohnt sich das nicht.

Aufgabe der Erfindung ist es, ein Verfahren zur adaptiven Vorschubregelung für eine numerisch gesteuerte Werkzeugmaschine anzugeben, das den Einsatz der Vorschubregelung für jedes NC-Programm auf einfache und sichere Weise ermöglicht, insbesondere ohne Anpassungen im NC-Programm selbst vornehmen zu müssen.

Diese Aufgabe wird gelöst durch ein Verfahren mit den Merkmalen des Anspruches 1. Vorteilhafte Ausführungsformen ergeben sich aus den Merkmalen, die in den von Anspruch 1 abhängigen Ansprüchen aufgeführt sind.

Es wird ein Verfahren zur adaptiven Vorschubregelung an numerisch gesteuerten Werkzeugmaschinen beschrieben. Die Werkzeugmaschine dient zur spanabhebenden Bearbeitung von Werkstücken mit einem an einer Spindel rotierenden Werkzeug nach der Vorgabe eines NC-Programms.

Die von der Spindel aufgenommene Leistung wird durch Beeinflussung eines im NC-Programm für die Bewegung zwischen Werkzeug und Werkstück festgelegten Bahnvorschubs möglichst konstant gehalten. Das Verfahren zur adaptiven Vorschubregelung wird dabei durch einen die Bearbeitung des Werkstücks einleitenden Befehl des NC-Programms aktiviert und durch einen die Bearbeitung des Werkstücks beendenden Befehl des NC-Programms deaktiviert.

Ein solcher die Bearbeitung einleitender Befehl kann beispielsweise die Beschleunigung der Spindel auf eine Solldrehzahl darstellen, entsprechend kann der Befehl zum Beenden der Bearbeitung ein Befehl zum Anhalten der Spindel sein.

Das Verfahren zur adaptiven Vorschubregelung ist dabei so ausgestaltet, dass ein Bediener der numerisch gesteuerten Werkzeugmaschine nur ganz grundsätzlich anhand eines Auswahlmittels entscheiden muss, ob die adaptive Vorschubregelung zum Einsatz kommen soll. Um weitere Einstellungen und Optimierungen muss sich der Bediener nicht kümmern. Insbesondere muss das verwendete NC-Programm nicht speziell auf den Einsatz der adaptiven Vorschubregelung vorbereitet werden. Beim ersten Abarbeiten eines NC-Programms wird von der Numerischen Steuerung erkannt, dass noch keine zum jeweiligen NC-Programm korrespondierende Parameterdatei vorliegt. Diese Parameterdatei wird daraufhin beim ersten Abarbeiten in einem Lernmodus angelegt und dient ab dem zweiten Abarbeiten des NC-Programms der Durchführung der adaptiven Vorschubregelung.

Da somit keinerlei Programmieraufwand nötig ist, um ein beliebiges NC-Programm mit einer adaptiven Vorschubregelung abzuarbeiten, kann ohne großen Aufwand ein hoher Nutzen aus einem solchen Verfahren gezogen werden. Die Bearbeitungszeiten eines Werkzeuges können deutlich reduziert werden, die Abnutzung eines Werkzeuges kann überwacht werden, ein größerer Schaden bei einem Werkzeugbruch kann vermieden werden. Da alle diese Vorteile ohne Aufwand möglich sind, wird die an sich bekannte positive Wirkung einer adaptiven Vorschubregelung wesentlich einfacher verfügbar und damit das entsprechende Verfahren breiter anwendbar.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Ausschnitt einer Werkzeugmaschine,
- Figur 2: ein Blockschaltbild einer Numerischen Steuerung mit adaptiver Vorschubregelung.

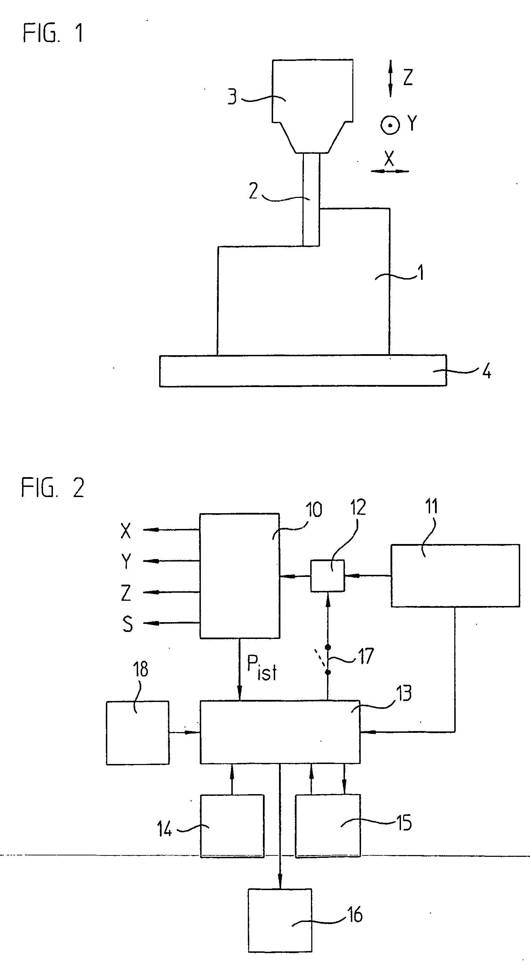

Figur 1 stellt schematisch einen Ausschnitt einer Werkzeugmaschine dar. Auf einem Tisch 4 ist ein Werkstück 1 befestigt. Dieses Werkstück 1 wird von einem Werkzeug 2 (hier ein Fräser) bearbeitet, das an einer Spindel 3 befestigt ist und durch diese Spindel 3 mit hoher Drehzahl gedreht wird.

Das Werkzeug 2 ist relativ zum Werkstück 1 in drei Richtungen X, Y, Z beweglich. Andere Werkzeugmaschinen können weitere oder andere Bewegungsrichtungen zwischen Werkzeug 2 und Werkstück 1 erlauben, etwa durch zusätzliche Schwenkachsen.

Die Leistungsaufnahme der Spindel 3 hängt davon ab, mit welchem Vorschub und mit wie viel Kontaktfläche zum Werkstück 1 der Fräser 2 bewegt wird. So ist die Leistungsaufnahme relativ gering, wenn die Spindel 3 bereits mit der Solldrehzahl rotiert, aber der Fräser 2 noch nicht mit dem Werkstück 1 in Kontakt ist. Die Spindelleistung ist sehr hoch, wenn der Fräser 2 sehr schnell und mit großer Kontaktfläche durch das Werkstück 1 bewegt wird. Die Spindel muss dann die Arbeit leisten, die nötig ist, um das im Werkstück 1 pro Zeiteinheit durchmessene Volumen zu zerspanen. Die Spindelleistung hängt auch vom Zustand des Fräsers 2 ab: Ein neuer Fräser mit sehr scharfen Schnittkanten erfordert für das gleiche Zerspanungsvolumen weniger Arbeit als ein abgenutzter Fräser 2 mit stumpfen Schnittkanten.

Beim Programmieren eines NC-Programms werden diese Zusammenhänge möglichst berücksichtigt. So wird versucht, einen Schnitt des Fräsers 2 durch das Werkstück 1 mit geringer Eintauchtiefe mit einem höheren Vorschub zu programmieren als einen Schnitt mit einer großen Eintauchtiefe. Nur durch die optimale Ausnutzung der maximalen Spindelleistung werden die Möglichkeiten einer Werkzeugmaschine voll ausgenutzt. Da beim Programmieren aber nicht alle Umstände berücksichtigt werden können (z.B. der Zustand des Werkzeugs 2), besteht bezüglich des Vorschubs auch in den Fällen Optimierungsbedarf, in denen die bekannten geometrischen Randbedingungen bereits berücksichtigt wurden. Außerdem beherrschen durchaus nicht alle Programmiersysteme solche Vorschub - Optimierungen.

Die im Stand der Technik bekannten Vorschubregelungen beobachten daher die Spindelleistung während eines Schnittvorganges. Liegt die Spindelleistung unter einem vorgegeben Wert, so wird der Vorschub des Werkzeugs 2 in gewissen Grenzen erhöht, bzw. erniedrigt, wenn die Spindelleistung oberhalb des vorgegebenen Wertes liegt. Übliche Beeinflussungsbereiche liegen etwa in einem Bereich von 50% bis 150% des programmierten Vorschubes. Sollte auch nach einer Reduzierung des Vorschubes um den maximal erlaubten Betrag die Spindelleistung zu hoch liegen, kann auf ein Problem wie z.B. den Bruch des Werkzeugs 2 geschlossen und mit einem sofortigen Stopp der Werkzeugmaschine reagiert werden. So werden eventuelle Folgeschäden minimiert.

Figur 2 stellt schematisch in einem Blockschaltbild das Zusammenwirken der einzelnen am Verfahren zur Vorschubregelung beteiligten Elemente einer Numerischen Steuerung dar. Die Grundfunktion der Numerischen Steuerung besteht darin, ein NC-Programm 11 auszulesen und in einer Antriebssteuerung 10 die Antriebe der Achsen X, Y, Z sowie den Antrieb der Spindel S (Element 3 in Figur 1) gemäß den Vorgaben des NC-Programms 11 zu bewerkstelligen.

Üblicherweise weist eine Numerische Steuerung eine Override - Funktion 12 auf, mit der die im NC-Programm 11 festgelegten Vorschübe beeinflusst werden können. Dies geschieht üblicherweise über ein vom Bediener betätigbares Potentiometer, mit dem der Vorschub zwischen 0% (Stillstand) und z.B. 150% vom programmierten Wert eingestellt werden kann. Diese Einstellung wirkt auf alle Achsen gleich, so dass die programmierte Bahn stets erhalten bleibt.

Das Verfahren zur Vorschubregelung greift an eben dieser Override - Funktion 12 ein und übernimmt sozusagen die Rolle des Bedieners, um in gewissen Grenzen den Vorschub zu variieren. Dabei ist sichergestellt, dass auch bei aktiver Vorschubregelung der Bediener jederzeit eine niedrigere Vorschubgeschwindigkeit über die Override - Funktion einstellen kann. Dies ist eine wichtige Sicherheitsanforderung. Eine mögliche Umsetzung besteht darin, dass bei am Potentiometer eingestellten Override - Werten von weniger als 50% diese Einstellung grundsätzlich Vorrang vor der adaptiven Vorschubregelung hat.

Eine Logikeinheit 13, die die Logik für die adaptive Vorschubregelung enthält, hat verschiedene Aufgaben. So analysiert sie das NC-Programm und teilt es in mehrere Schnittvorgänge oder kurz Schnitte ein. Ein Schnittvorgang liegt zwischen einem Befehl zum Starten der Spindel 3 (egal in welcher Drehrichtung, üblicherweise einem M03 oder M04 - Befehl) und einem Befehl zum Anhalten der Spindel 3 (M05 - Befehl). Nur während eines solchen Schnittvorgangs ist die Logikeinheit 13 aktiv.

Ein Schnitt weist mehrere Phasen auf:
- Beschleunigungsphase: Zunächst beschleunigt die Spindel 3 auf ihre Solldrehzahl.
- Leerlaufphase: Hat die Spindel die Solldrehzahl erreicht, nimmt sie die Leerlaufleistung Pfree auf.
- Eintrittsphase: In einer Eintrittsphase tritt das Werkzeug 2 in das Werkstück 1 ein. Die Eintrittsphase gilt als beendet, wenn das Werkzeug 2 eine Bahn entsprechend dem Radius des Werkzeugs 2 zurückgelegt hat.
- Bearbeitungsphase: Hier befindet sich das Werkzeug 2 im Eingriff mit dem Werkstück 1 und bearbeitet dieses.
- Austrittsphase: Das Werkzeug 2 verlässt das Werkstück.

An die Austrittsphase schließt sich wieder eine Leerlaufphase an. Es folgt dann entweder eine weitere Beschleunigungsphase, während der die Spindel 3 zum Stillstand gebremst wird, oder eine erneute Eintrittsphase, wenn das Werkzeug 2 erneut eine Bearbeitungsbahn durch das Werkstück 1 zieht.

Ein Schnitt im Sinne dieses Beispiels beginnt und endet immer mit einer Beschleunigungsphase. Ein Schnitt kann dabei mehrmals die Abfolge Leerlaufphase - Eintrittsphase - Bearbeitungsphase - Austrittsphase - Leerlaufphase enthalten.

Eine sinnvolle adaptive Vorschubregelung ist nur während der Bearbeitungsphase möglich, während der Leerlaufphasen, Eintrittsphasen und Austrittsphasen kann aber eine Beeinflussung der Override - Funktion 12 dennoch Sinn machen. Während der Beschleunigungsphasen findet hingegen keinerlei Beeinflussung des Override - Funktion 12 statt.

Die aktuell von der Spindel 3 aufgenommene Leistung Pist wird von der Antriebssteuerung 10 an die Logikeinheit 13 übergeben, entweder in definierten kurzen zeitlichen Abständen oder auf Anfrage.

Die Logikeinheit 13 berücksichtigt ferner das jeweils eingewechselte Werkzeug. Hierzu schlägt es in einer Werkzeugtabelle 18, die zu jedem Werkzeug 2 eine Reihe von Informationen enthält, nach, ob für dieses Werkzeug eine Vorschubregelung vorgesehen ist. Vorzugsweise geschieht dies, indem in der Werkzeugtabelle 18 ein Eintrag vorgesehen wird, der eine von mehreren möglichen Ausgestaltungen in der Form verschiedener Profite für die Vorschubregelung auswählt. Fehlt der Eintrag, oder enthält er einen Hinweis, dass ausdrücklich keine Vorschubregelung erfolgen soll, so bleibt die Vorschubregelung für dieses Werkzeug inaktiv.

Die verschiedenen Profile für die Vorschubregelung werden in einer Tabelle 14 definiert. Diese Tabelle 14 hat z.B. folgende Gestalt:

| Name | Vmin | Vmax | Vfree | Vlfl | Sdiff | Ovld | Plvl |
|---|---|---|---|---|---|---|---|
| Standard | 70% | 130% | 140% | 70% | 8% | F | 3% |
| Sicher | 80% | 120% | 120% | 90% | 10% | M | 3% |
| Schnell | 90% | 150% | 150% | 100% | 12% | - | 3% |
| Überwachen | 100% | 100% | 100% | 100% | 8% | S | 3% |

Die Einträge in der Tabelle 14 haben dabei folgende Bedeutungen: Für jede der vier in diesem Beispiel angegebenen Profile wird zunächst in der Spalte "Name" der Name des Profils genannt, der auch in der Werkzeugtabelle 18 wie beschrieben eingetragen ist. In der nächsten Spalte "Vmin" ist angegeben, auf welchen Wert in Prozent des programmierten Vorschubes geregelt werden darf, wenn die Spindelleistung zu hoch liegt. In der nächsten Spalte "Vmax" ist angegeben, auf welchen Wert in Prozent des programmierten Vorschubes geregelt werden darf, wenn die Spindelleistung zu niedrig liegt. Die Regelung zwischen den beiden Werten Vmin und Vmax findet nur während der Bearbeitungsphase statt.

In der nächsten Spalte "Vfree" ist angegeben, auf welchen Wert in Prozent des programmierten Vorschubes die Override - Funktion gestellt werden soll, wenn das Werkzeug 2 nicht im Eingriff mit dem Werkstück 1 ist, also während der Leerlaufphase.

Die nächste Spalte "Vlvl" gibt an, auf welchen Vorschub in Prozent des programmierten Vorschubs die Override - Funktion während der Eintrittsphase bzw. Austrittsphase gestellt werden soll, also nachdem ein Eintritt bzw. Austritt des Werkzeugs 2 in das bzw. aus dem Werkstück 1 registriert wurde. Dieser Vorschub gilt dann für eine Bahnlänge, die dem Radius des Werkzeugs 2 entspricht. Beim Eintritt in das Werkstück 1 wird so die Mechanik der Werkzeugmaschine geschont, beim Austritt wird verhindert, dass das Werkzeug 2 wegen der sinkenden Spindelleistung beim Verlassen des Werkstückes 1 über den programmierten Vorschub beschleunigt wird. Vielmehr wird rechtzeitig vor dem eigentlichen Austritt die Geschwindigkeit reduziert. Dadurch wird ein Ausreißen des Werkstückes 1 vermieden.

Die nächste Spalte "Sdiff" gibt die maximal erlaubte Abweichung der tatsächlichen Spindeldrehzahl in Prozent von der programmierten Spindeldrehzahl an.

Die Spalte "Ovld" definiert die Reaktion auf eine Überlastung der Spindel, also für den Fall, dass trotz maximal erlaubter Reduzierung des Vorschubs die tatsächliche Spindeldrehzahl um mehr als die maximal erlaubte Abweichung von der Solldrehzahl abweicht. Dabei bedeutet F: Freifahren des Werkzeugs und anschließendes Anhalten, S: sofortiges Anhalten, M: lediglich Meldung der Überlastung an eine übergeordnete Einheit.

Schließlich gibt der Parameter "Plvl" in der letzten Spalte an, um wie viel Prozent die Schwellleistung, bei der ein Eintritt bzw. Austritt des Werkzeugs 2 in das bzw. aus dem Werkstück 1 erkannt wird, über der Leerlaufleistung Pfree liegt.

Nun soll beschrieben werden, wie die Logikeinheit 13 vorgeht, um ein NC-Programm 11 anhand der Werkzeugtabelle 18 und der Tabelle 14 nach Möglichkeit unter adaptiver Vorschubregelung abzuarbeiten. Hierzu sei angenommen, das dass NC-Programm 11 bisher noch nicht abgearbeitet wurde. Die oben erklärten Einträge in der Werkzeugtabelle 18 und der Tabelle 14 sind jedoch vorhanden, so dass eine Vorschubregelung prinzipiell möglich ist. Entscheidend ist, dass diese Vorschubregelung ohne irgendwelche Änderungen am NC-Programm ablaufen kann. Über ein Auswahlmittel 17 muss ein Bediener der Werkzeugmaschine nur ganz grundsätzlich Auswählen, dass die adaptive Vorschubregelung aktiviert sein soll. Dies ist in der Figur 2 durch einen Schalter 17 im Pfad von der Logikeinheit 13 zur Override - Funktion 12 angedeutet. In der Praxis kann das Auswahlelement 17 z.B. aus einem auf einem Bildschirm der numerischen Steuerung dargestellten, an- und abwählbaren Auswahlfeld bestehen.

Die Logikeinheit 13 prüft, ob bereits eine dem NC-Programm 11 zugeordnete Parameterdatei 15 existiert. Dies kann beispielsweise über eine entsprechende Namensgebung für die Parameterdatei 15 erleichtert werden, wenn diese einen bis auf eine Dateiendung gleichen Namen trägt wie das NC-Programm 11. Da hier von einer ersten Abarbeitung des NC-Programms 11 ausgegangen wird, existiert die passende Parameterdatei 15 noch nicht und muss beim ersten Abarbeiten angelegt und gefüllt werden.

Hierzu zerlegt die Logikeinheit 13 das NC-Programm 11 in einzelne Schnitte, und legt in der Parameterdatei 15 für jeden Schnitt einen Datensatz an, der z.B. mit der Schnittnummer beginnt. Da im NC-Programm 11 über einen TOOL CALL Befehl auch festgelegt ist, mit welchem Werkzeug 2 ein Schnitt durchgeführt werden soll, lässt sich anhand der Werkzeugtabelle 18 das diesem Werkzeug zugeordnete Profil für die Vorschubsteuerung auslesen und dem jeweiligen Schnitt zuordnen. Alternativ können auch die in der Tabelle 14 abgelegten Parameter des jeweiligen Profils unmittelbar der Schnittnummer in der Parameterdatei 15 zugeordnet werden.

Die einzelnen Schnitte werden während der Lernphase feiner unterteilt in die oben beschriebenen Beschleunigungsphasen, Leerlaufphasen, Eintrittsphasen, Bearbeitungsphasen und Austrittsphasen.

Das NC-Programm 11 wird nun ohne Vorschubregelung ausgeführt, also stets mit dem programmierten Vorschub. Dabei erfasst die Logikeinheit 13 die in den Bearbeitungsphasen auftretende maximale Leistung Pmax. Hierzu muss die aktuelle Spindelleistung Pist aus der Antriebssteuerung 10 an die Logikeinheit 13 übermittelt werden, z.B. als Prozentwert der nominalen Spindelleistung. Außerdem wird die Leerlaufleistung Pfree der Spindel 3 erfasst, die nach der Beschleunigung der Spindel 3 auf Solldrehzahl, und noch ohne Kontakt des Fräsers 2 zum Werkstück 1 vorliegt. Anhand des oben beschriebenen Parameters "Plvl" kann so der Eintritt in das Werkstück 1 erkannt und eine entsprechende Reaktion (Verlangsamung) in der Vorschubregelung vorgenommen werden. Der wichtigste Parameter, der in der Parameterdatei 15 gespeichert wird, ist die maximal während den Bearbeitungsphasen eines Schnitts auftretende Spindelleistung Pmax. Bei der nächsten Abarbeitung des NC-Programms 11 wird die Vorschubregelung versuchen, alle Bearbeitungsphasen des Schnittes mit dieser Spindelleistung zu bearbeiten - dazu weiter unten mehr.

Unter Umständen dauert die Abarbeitung eines Schnittes recht lange. Falls dabei nach einer gewissen Zeit keine weiteren Spitzen in der Spindelleistung zu erwarten sind, kann der Bediener den Lernmodus für diesen Schnitt abbrechen und damit in den Regelmodus umschalten. Der aktuelle Schnitt wird dann unter adaptiver Vorschubregelung zu Ende gebracht, wobei die gerade ermittelten und in die Parameterdatei 15 geschriebenen Parameter verwendet werden. Beim nächsten Schnitt wird die Logikeinheit feststellen, dass die Parameterdatei 15 unvollständig ist, für diesen Schnitt wieder in den Lernmodus schalten und die fehlenden Parameter in der Parameterdatei 15 ergänzen.

Nach einer vollständigen Abarbeitung des NC-Programms 11 liegt eine vollständige Parameterdatei 15 vor, die für jeden Schnitt des NC-Programms 11 einen Eintrag enthält, der eine adaptive Vorschubregelung ermöglicht. Beim nächsten Start des NC-Programms 11 wird die Logikeinheit 13 daher erkennen, dass das NC-Programm 11 von Anfang an unter Vorschubregelung bearbeitet werden kann, sofern dies über das Auswahlmittel 17 so eingestellt wurde. Ein weiterer Lernmodus ist nicht notwendig.

Bereits bei der Abarbeitung des NC-Programms 11 im Lernmodus wird eine zum NC-Programm 11 korrespondierende Statistikdatei 16 angelegt. In dieser werden verschiedene Werte abgelegt, die z.B. zur Bestimmung der Effektivität der Vorschubregelung nützlich sind. So kann für jeden Schnitt die Bearbeitungszeit im Lernmodus und die Bearbeitungszeit unter Vorschubregelung abgespeichert und später verglichen werden. Die Statistikdatei 16 wird also im Lernmodus erzeugt und während der aktiven Vorschubregelung ergänzt.

Die Tatsache, dass das hier beschriebene Verfahren ohne jede Änderung am NC-Programm 11 eine adaptive Vorschubregelung ermöglicht, bedeutet natürlich nicht, dass solche Änderungen am NC-Programm 11 ausgeschlossen sind. Es kann vorteilhaft sein, bestimmte Bearbeitungsschritte im NC-Programm ganz von der Vorschubregelung auszuschließen. Dies kann mit speziellen Befehlen im NC-Programm 11 erreicht werden, die auf das Auswahlmittel 17 so einwirken, dass eine aktivierte Vorschubregelung zeitweise deaktiviert werden kann.

Beim zweiten Abarbeiten des NC-Programms 11, wenn also die Parameterdatei 15 vorliegt und mit den Daten für jeden Schnitt gefüllt ist, arbeitet die Logikeinheit im Regelungsmodus. Während der Leerlaufphasen, der Eintritts- und Austrittsphasen wird dabei die in der Tabelle 14 festgelegte Override - Einstellung für den Vorschub angewandt. Der höhere Vorschub in der Leerlaufphase spart dabei einfach Zeit, der reduzierte Vorschub bei Ein- und Austritt des Werkzeugs schont die Mechanik der Werkzeugmaschine und des Werkzeug 2. Ist im NC-Programm 11 statt eines speziellen Vorschubwertes einfach "maximaler Vorschub" (Eilgang) programmiert, finden die Override - Einstellungen keine Anwendung.

Während der eigentlichen Bearbeitungsphasen findet eine Regelung der Spindelleistung durch Anpassung des Vorschubs über die Override - Funktion 12 auf den zuvor ermittelten maximalen Leistungswert Pmax statt, mit den bereits erwähnten Vorteilen.

## Patentansprüche

1. Verfahren zur adaptiven Vorschubregelung an numerisch gesteuerten Werkzeugmaschinen, zur spanabhebenden Bearbeitung eines Werkstücks (1) mit einem an einer Spindel (3) rotierenden Werkzeug (2) nach der Vorgabe eines NC-Programms (11), wobei eine von der Spindel (3) aufgenommene Leistung (Pist) durch Beeinflussung eines im NC-Programm (11) für die Bewegung zwischen Werkzeug (2) und Werkstück (1) festgelegten Bahnvorschubs möglichst konstant gehalten wird, **dadurch gekennzeichnet, dass** das Verfahren zur adaptiven Vorschubregelung durch einen die Bearbeitung des Werkstücks (1) einleitenden Befehl des NC-Programms (11) zum Starten der Spindel (3) aktiviert und durch einen die Bearbeitung des Werkstücks (1) beendenden Befehl des NC-Programms (11) zum Anhalten der Spindel (3) deaktiviert wird, und dass für jedes im NC-Programm (11) aufgerufene Werkzeug (2) in einer Werkzeugtabelle (18) überprüft wird, ob für dieses Werkzeug (2) eine adaptive Vorschubregelung vorgesehen ist, und nur für diesen Fall die adaptive Vorschubregelung aktiviert wird, und dass mittels der Werkzeugtabelle (18) außerdem eine Reduzierung des Bahnvorschubs hinterlegt ist, die während einer Eintrittsphase des Werkzeugs (2) in das Werkstück (1) bzw. während einer Austrittsphase des Werkzeugs (2) aus dem Werkstück (1) gelten soll.

2. Verfahren nach Anspruch 1, **dadurch gekennzeichnet, dass** nach dem die Bearbeitung des Werkstücks (1) einleitenden Befehl zum Starten der Spindel (3) die adaptive Vorschubregelung erst dann aktiviert wird, wenn die Spindel (3) eine Solldrehzahl erreicht hat.

3. Verfahren nach Anspruch 1, **dadurch gekennzeichnet, dass** in der Werkzeugtabelle (18) jedem Werkzeug (2), für das eine adaptive Vorschubregelung vorgesehen ist, eines von mehreren in einer Tabelle (14) abgelegten Profilen für die adaptive Vorschubregelung zugeordnet ist.

4. Verfahren nach einem der vorhergehenden Ansprüche, **dadurch gekennzeichnet, dass** die adaptive Vorschubregelung in einem Lemmodus betrieben wird, wenn das aktuelle NC-Programm (11) erstmals abgearbeitet wird, und dass in diesem Lemmodus die für eine adaptive Vorschubregelung notwendigen Parameter in eine zum abgearbeiteten NC-Programm (11) korrespondierende Parameterdatei (15) geschrieben werden.

5. Verfahren nach Anspruch 4, **dadurch gekennzeichnet, dass** das NC-Programm anhand von Spindel - Startbefehlen und Spindel - Stoppbefehlen in einzelne Schnitte eingeteilt wird, und dass in die Parameterdatei (15) für jeden Schnitt eine jeweils maximal erreichte Spindelleistung eingetragen wird.

6. Verfahren nach Anspruch 5, **dadurch gekennzeichnet, dass** jeder Schnitt in Leeraufphasen, Eintrittsphasen, Bearbeitungsphasen und Austrittsphasen unterteilt wird, und dass in die Parameterdatei (15) für jeden Schnitt die während der Bearbeitungsphasen auftretende maximale Spindelleistung eingetragen wird.

7. Verfahren nach Anspruch 4, 5 oder 6, **dadurch gekennzeichnet, dass** die adaptive Vorschubregelung in einem Regelungsmodus betrieben wird, wenn zum Zeitpunkt der Abarbeitung eines NC-Programms (11) die zum NC-Programm (11) korrespondierende Parameterdatei (15) vorliegt.

8. Verfahren nach Anspruch 7, **dadurch gekennzeichnet, dass** bei manuellem Abbruch des Lernmodus während eines Schnittvorgangs die adaptive Vorschubregelung bis zum Ende dieses Schnittvorgangs im Regelungsmodus unter Verwendung der bis zum Abbruch des Lemmodus erstellten Parameterdatei (15) betrieben wird.

9. Verfahren nach Anspruch 7 oder 8, **dadurch gekennzeichnet, dass** beim Erkennen einer unvollständigen Parameterdatei (15) solche Schnitte, zu denen Parameter in der Parameterdatei (15) vorliegen, im Regelungsmodus abgearbeitet werden, und solche Schnitte, für die Parameter nicht vorliegen, im Lemmodus abgearbeitet werden, wobei fehlende Parameter ermittelt und in der Parameterdatei (15) ergänzt werden.

## Claims

1. A method for the adaptive feed regulation at numerically controlled tool machines for the machining of a work piece (1) comprising a tool (2), which rotates on a spindle (3), according to the specification provided by a NC program (11), wherein a power (Pist) absorbed by the spindle (3) is held to be as constant as possible by impacting a feed rate, which is specified in the NC program (11) for the movement between tool (2) and work piece (1), **characterized in that** the method for the adaptive feed regulation is activated to start the spindle (3) by means of a command of the NC program (11), which initiates the machining of the work piece (1), and is deactivated by means of a command of the NC program (11) to stop the spindle (3), which ends the machining the work piece (1), and that a tool table (18) is checked for each of the tools (2) selected in the NC program (11) whether provision is made for an adaptive feed regulation for this tool (2) and the adaptive feed regulation is activated only in this case and that a reduction of the feed rate, which is to apply during an entry phase of the tool (2) into the work piece (1) or during an exit phase of the tool (2) out of the work piece (1), respectively, is furthermore stored by means of the tool table (18).

2. The method according to claim 1, **characterized in that** the adaptive feed regulation is activated according to the command for starting the spindle (3), which initiates the machining of the work piece (1), only when the spindle (3) has reached a set rotation speed.

3. The method according to claim 1, **characterized in that** one of a plurality of profiles for the adaptive feed regulation stored in a table (14) is assigned to each tool (2) in the tool table (18), for which an adaptive feed regulation is provided.

4. The method according to one of the preceding claims, **characterized in that** the adaptive feed regulation is operated in a learning mode when the current NC program (11) is executed for the first time and that in this learning mode the parameters, which are necessary for an adaptive feed regulation, are written into a parameter file (15), which corresponds to the executed NC program (11).

5. The method according to claim 4, **characterized in that** the NC program is divided into individual cuts by means of spindle start commands and spindle stop commands and that a maximally attained spindle power is in each case recorded in the parameter file (15) for each cut.

6. The method according to claim 5, **characterized in that** each cut is divided into idling phases, entry phases, machining phases and exit phases and that the maximum spindle power, which develops during the machining phases, is recorded in the parameter file (15) for each cut.

7. The method according to claim 4, 5 or 6, **characterized in that** the adaptive feed regulation is operated in a regulating mode when the parameter file (15), which corresponds to the NC program (11), is available at the time of the execution of an NC program (11).

8. The method according to claim 7, **characterized in that**, in response to a manual cancellation of the learning mode during a cutting process, the adaptive feed regulation is operated in the regulating mode until the end of this cutting process using the parameter file (15), which has been established to the cancellation of the learning mode.

9. The method according to claim 7 or 8, **characterized in that**, when an incomplete parameter file (15) is detected, such cuts, for which parameters are available in the parameter file (15), are executed in the regulating mode and that such cuts, for which parameters are not available, are executed in the learning mode, wherein missing parameters are determined and are supplemented in the parameter file (15)

## Revendications

1. Procédé pour le réglage d'avancement adaptatif sur des machines-outils commandées numériquement, pour le traitement par enlèvement de copeaux d'une pièce à usiner (1) avec un outil (2) rotatif sur un arbre (3), selon les consignes d'un programme de commande numérique (11), dans lequel une puissance (Pist) reçue par l'arbre (3) est maintenue la plus constante possible par l'influence d'un avancement de bande déterminé dans le programme de commande numérique (11) pour le mouvement entre l'outil (2) et la pièce à usiner (1), **caractérisé en ce que** le procédé pour le réglage d'avancement adaptatif est activé par un ordre du programme de commande numérique (11) démarrant le traitement de la pièce à usiner (1), pour l'actionnement de l'arbre (3), et désactivé par un ordre du programme de commande numérique (11) mettant fin au traitement de la pièce à usiner (1), pour l'arrêt de l'arbre (3), et **en ce que** pour chaque outil (2) utilisé dans le programme de commande numérique (11), il est vérifié dans un tableau d'outils (18) s'il existe un réglage d'avancement adaptatif prévu pour cet outil (2), le réglage d'avancement adaptatif étant activé uniquement dans ce cas, et **en ce que** le tableau d'outils (18) permet en outre d'enregistrer une réduction de l'avancement de bande, qui est censée être appliquée pendant une phase d'entrée de l'outil (2) dans la pièce à usiner (1) ou pendant une phase de sortie de l'outil (2) hors de la pièce à usiner (1).

2. Procédé selon la revendication 1, **caractérisé en ce que** suite à l'ordre démarrant le traitement de la pièce à usiner (1), pour l'actionnement de l'arbre (3), le réglage d'avancement adaptatif est activé seulement une fois que l'arbre (3) a atteint une vitesse de rotation de consigne.

3. Procédé selon la revendication 1, **caractérisé en ce que** dans le tableau d'outils (18), un profil parmi plusieurs profils enregistrés dans un tableau (14) pour le réglage d'avancement adaptatif est attribué à chaque outil (2) pour lequel il est prévu un réglage d'avancement adaptatif.

4. Procédé selon l'une des revendications précédentes, **caractérisé en ce que** le réglage d'avancement adaptatif fonctionne dans un mode d'apprentissage lorsque le programme de commande numérique (11) actuel est exécuté pour la première fois, et **en ce que** dans ce mode d'apprentissage, les paramètres nécessaires à un réglage d'avancement adaptatif sont inscrits dans un fichier de paramètres (15) correspondant au programme de commande numérique (11) exécuté.

5. Procédé selon la revendication 4, **caractérisé en ce que** le programme de commande numérique est divisé en différentes tranches en fonction d'ordres d'actionnement de l'arbre et d'ordres d'arrêt de l'arbre, et **en ce qu'**une puissance d'arbre maximale atteinte est respectivement enregistrée dans le fichier de paramètres (15) pour chaque tranche.

6. Procédé selon la revendication 5, **caractérisé en ce que** chaque tranche est divisée en phases de marche à vide, en phases d'entrée, en phases de traitement et en phases de sortie, et **en ce que** la puissance d'arbre maximale rencontrée pendant les phases de traitement est enregistrée dans le fichier de paramètres (15) pour chaque tranche.

7. Procédé selon la revendication 4, 5 ou 6, **caractérisé en ce que** le réglage d'avancement adaptatif fonctionne dans un mode de réglage lorsque le fichier de paramètres (15) correspondant au programme de commande numérique (11) est disponible au moment de l'exécution d'un programme de commande numérique (11).

8. Procédé selon la revendication 7, **caractérisé en ce que** lors d'un arrêt manuel du mode d'apprentissage pendant l'exécution d'une tranche de programme, le réglage d'avancement adaptatif sera effectué en mode de réglage jusqu'à la fin de cette tranche de programme, à l'aide du fichier de paramètres (15) établi jusqu'à l'arrêt du mode d'apprentissage.

9. Procédé selon la revendication 7 ou 8, **caractérisé en ce que** lors de la détection d'un fichier de paramètres (15) incomplet, les tranches pour lesquelles il existe des paramètres dans le fichier de paramètres (15) sont exécutées en mode de réglage, et les tranches pour lesquelles il n'existe pas de paramètres sont exécutées en mode d'apprentissage, les paramètres manquants étant déterminés et complétés dans le fichier de paramètres (15).
